# EUROPEAN PATENT SPECIFICATION

(11) **EP 2 556 929 B1**
(45) Date of publication and mention of the grant of the patent: **18.02.2015**
(21) Application number: 11177178.8
(22) Date of filing: 10.08.2011
(51) Int. Cl.: B25J 9/00, B05B 13/04, B05B 13/02, B25J 11/00

(54) **Painting system**
Anstreichsystem
Système de peinture

(43) Date of publication of application: 13.02.2013
(73) Proprietor: Kabushiki Kaisha Yaskawa Denki, Kitakyushu-shi, Fukuoka 806-0004 (JP)
(72) Inventor: KOYANAGI, Kenichi, Kitakyushu-Shi, Fukuoka 806-0004 (JP); YOSHINO, Katsuhiko, Kitakyushu-Shi, Fukuoka 806-0004 (JP)
(74) Representative: Gendron, Vincent Christian

(56) References cited:
- EP-A1- 2 184 112
- DE-A1-102008 045 553
- FR-A1- 2 892 656
- US-A- 4 636 136
- US-A- 5 286 160
- US-B1- 6 398 871

## Description

### BACKGROUND OF THE INVENTION

### Field of the Invention

The present invention relates to a painting system, and more particularly, it relates to a painting system comprising a door opening/closing robot.

### Description of the Background Art

A painting system comprising a door opening/closing robot is known in general. International Patent Laying-Open No. WO2008/108401 discloses a painting system comprising a body transport device transporting a body, a door opening/closing and painting robot opening and closing a door (side door) of the body and painting an inner portion of the door and a traveling device supporting the door opening/closing and painting robot while allowing the door opening/closing and painting robot to travel along a transport direction for the body. The painting system according to this International Patent Laying-Open No. WO2008/10840 is so formed that the door opening/closing and painting robot opens the door of the body, paints the inner portion of the door and closes the door while the traveling device moves the door opening/closing and painting robot following the transported body. In a case where one robot paints an inner portion of a door and opens and closes the door as described in this International Patent Laying-Open No. WO2008/108401, a step of previously mounting a dedicated jig for keeping the door in an open state on a body is required. Therefore, in order to keep a door in an open state without a dedicated jig, a structure of providing a door opening/closing robot for opening and closing a door and keeping the door in an open state and a painting robot for painting an inner portion of the door separately is also known in general. In this case, both the painting robot and the door opening/closing robot must be capable of traveling by a traveling device.

However, in the painting system according to the aforementioned International Patent Laying-Open No. WO2008/108401, the traveling device for allowing the door opening/closing and painting robot to travel must be provided, and hence the structure of a paint booth is disadvantageously complicated, the size of the paint booth is disadvantageously increased and maintenance of the traveling device is disadvantageously required. Also in the structure of providing the painting robot and the door opening/closing robot separately and employing a traveling device, which is known in general, a paint booth is disadvantageously complicated and increased in size, and maintenance of the traveling device is disadvantageously required by providing the traveling device, similarly to the aforementioned structure according to International Patent Laying-Open No. WO2008/108401.

EP-A-2 184 112 discloses a painting system according to the preamble of claim 1 comprising a body transport device, a painting robot and a door opening/closing robot.

### SUMMARY OF THE INVENTION

The present invention has been proposed in order to solve the aforementioned problems, and an object of the present invention is to provide a painting system capable of painting an inner portion of a door without a traveling device.

To this end, there is provided a painting system according to claim 1.

Preferably, the door opening/closing robot is a horizontal multi-joint type robot.

Preferably still, the door opening/closing robot is arranged at the second height such that a position of a fingertip of the door opening/closing robot is equal to a height of the door of the body transported by the body transport device.

Preferably yet, the painting robot is fixedly set at the first height on a sidewall of a paint booth for the body, and the door opening/closing robot is fixedly set at the second height on the sidewall of the paint booth for the body.

The painting robot may be fixedly set on said sidewall of said paint booth for said body through a fixing mount.

Further, the first height at which the painting robot is set may be positioned above the second height.

Typically, the door opening/closing robot is a horizontal multi-joint type robot, the painting robot is a vertical multi-joint type robot, and a range of horizontal movement of the door opening/closing robot is larger than a range of horizontal movement of the painting robot.

Typically still, the door opening/closing robot is arranged on a downstream side (direction Y2) in a direction in which the body transport device transports the body with respect to the painting robot.

Typically yet, the door opening/closing robot and the painting robot are arranged at such a position that the door opening/closing robot and the painting robot overlap with each other in plan view.

Conveniently, a range of movement of the door opening/closing robot in a horizontal direction and a transport direction for the body is larger than a distance in which the body transport device moves the body during painting of the inner portion of the door of the body by the painting robot.

Conveniently still, the door opening/closing robot is formed to be capable of keeping the door in an open state in a state where a position of the door of the body transported in a transport direction of the body transport device has advanced in the transport direction with respect to a position where the door opening/closing robot is set.

Conveniently yet, the door opening/closing robot includes an opening/closing hand for opening and closing the door of the body; the opening/closing hand has an attraction implement in which a plurality of permanent magnets are stacked and is formed to attract the door of the body by the attraction implement for opening and closing the same; and at least part of the plurality of permanent magnets of the attraction implement is stacked such that the same magnetic poles of adjacent the permanent magnets face each other along a stacking direction (direction A).

Suitably, the opening/closing hand further has a mechanical sensor for detecting the door of the body.

Suitably still, the attraction implement is formed in a stick shape, and the opening/closing hand further has a rotation mechanism portion supporting the attraction implement while allowing the attraction implement to rotate about a long axis of the attraction implement.

Suitably yet, the opening/closing hand further has a load inhibiting portion inhibiting application of excessive load to the opening/closing hand when largely loaded.

In order to attain the aforementioned object, a painting system according to an aspect of the present invention comprises a body transport device transporting a body, a painting robot fixedly set at a first height, painting at least an inner portion of a door of the body while changing a posture to follow transport of the body by the body transport device, and a door opening/closing robot fixedly set at a second height different from the first height, so formed that an operating range thereof can overlap with an operating range of the painting robot, opening and closing the door of the body and keeping the door in an open state while changing a posture to follow the transport of the body by the body transport device.

In the painting system according to the aspect, as hereinabove described, the painting robot fixedly set at the first height, painting at least the inner portion of the door of the body while changing the posture to follow the transport of the body by the body transport device and the door opening/closing robot fixedly set at the second height different from the first height, so formed that the operating range thereof can overlap with the operating range of the painting robot, opening and closing the door of the body and keeping the door in an open state while changing the posture to follow the transport of the body by the body transport device are provided, whereby the inner portion of the door of the body can be painted without moving the painting robot and the door opening/closing robot, and hence the inner portion of the door can be painted without a traveling device. Further, the operating range of the painting robot set at the first height and the operating range of the door opening/closing robot set at the second height different from the first height can be overlapped with each other, and hence an operation for painting the inner portion of the door of the body and an operation for keeping the door in an open state can be easily performed. Consequently, a traveling device is not required in the painting system according to the aspect, and hence no maintenance of the traveling device is needed while the structure of a paint booth can be simplified and downsized.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view schematically showing the overall structure of a painting system according to a first embodiment of the present invention;
Fig. 2 is a front elevational view of the painting system according to the first embodiment shown in Fig. 1;
Fig. 3 is a schematic diagram for showing an opening/closing hand of the painting system according to the first embodiment of the present invention;
Fig. 4 is a schematic diagram for illustrating door opening and closing by the opening/closing hand of the painting system according to the first embodiment shown in Fig. 3;
Fig. 5 is a schematic diagram showing an attraction implement of the opening/closing hand of the painting system according to the first embodiment shown in Fig. 3;
Fig. 6 is a plan view for illustrating a door open operation of the painting system according to the first embodiment of the present invention;
Fig. 7 is a plan view for illustrating a door open state in operations of the painting system according to the first embodiment of the present invention;
Fig. 8 is a plan view for illustrating a painting operation of the painting system according to the first embodiment of the present invention;
Fig. 9 is a plan view for illustrating the painting operation of the painting system according to the first embodiment of the present invention;
Fig. 10 is a plan view for illustrating a state on completion of painting of the painting system according to the first embodiment of the present invention;
Fig. 11 is a plan view for illustrating a door open operation of a painting system according to a second embodiment of the present invention;
Fig. 12 is a plan view for illustrating a door open state in operations of the painting system according to the second embodiment of the present invention;
Fig. 13 is a plan view for illustrating a painting operation of the painting system according to the second embodiment of the present invention; and
Fig. 14 is a plan view for illustrating a state on completion of painting of the painting system according to the second embodiment of the present invention.

### DESCRIPTION OF THE PREFERRED EMBODIMENTS

Embodiments of the present invention are now described with reference to the drawings.

### (First Embodiment)

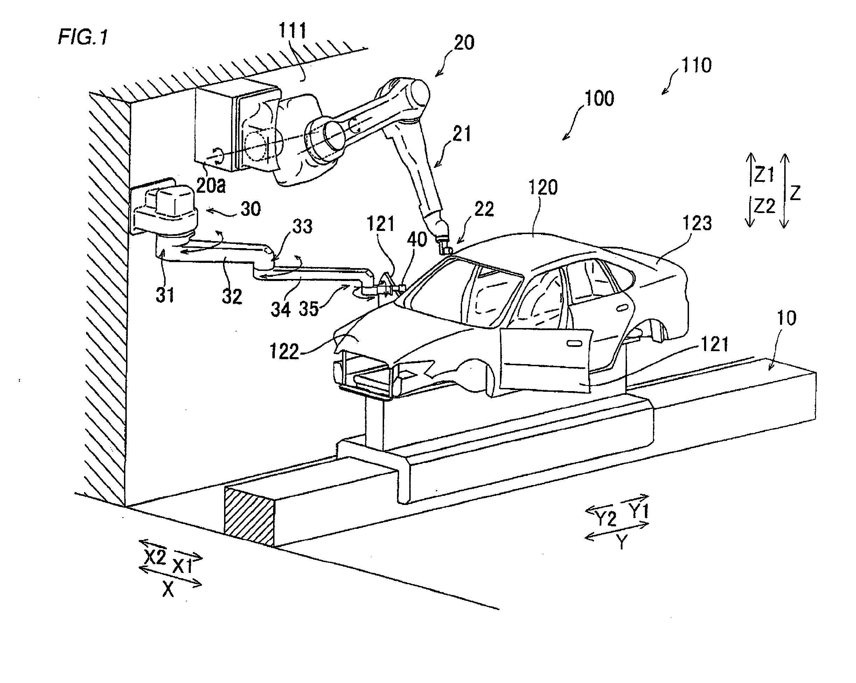

First, the structure of a system for painting a body, which is an example of a painting system 100 according to a first embodiment of the present invention, is described with reference to Figs. 1 to 6 and 10.

As shown in Fig. 1, the painting system 100 according to the first embodiment is a system for painting an inner portion of a door (side door) 121 of a body 120 in a paint booth 110. In the paint booth 110, air from which dust and the like are removed is supplied by an air conditioner (not shown), and the supplied air flows down from above (in a direction Z2). Painting of the body 120 includes a plurality of painting steps, and painting of the inner portion of the door 121 of the body is performed as part of a so-called inner plate painting step including painting of an inner portion of an engine hood 122 and an inner portion of a trunk hood 123. Descriptions of the painting of the inner portion of the engine hood 122 and the inner portion of the trunk hood 123 are omitted.

The painting system comprises a conveyor 10 transporting the body 120 in a transport direction (direction Y2), and a painting robot 20 and a door opening/closing robot 30 both arranged on a side of the conveyor 10 (in a direction X2). The painting robot 20 and the door opening/closing robot 30 are provided also on an opposite side (in a direction X1) through the conveyor 10. Both sides through the conveyor 10 have the same structure, and hence the illustration and the description are omitted. The conveyor 10, the painting robot 20 and the door opening/closing robot 30 of the painting system 100 each are controlled by a control device (not shown). The conveyor 10 is an example of the "body transport device".

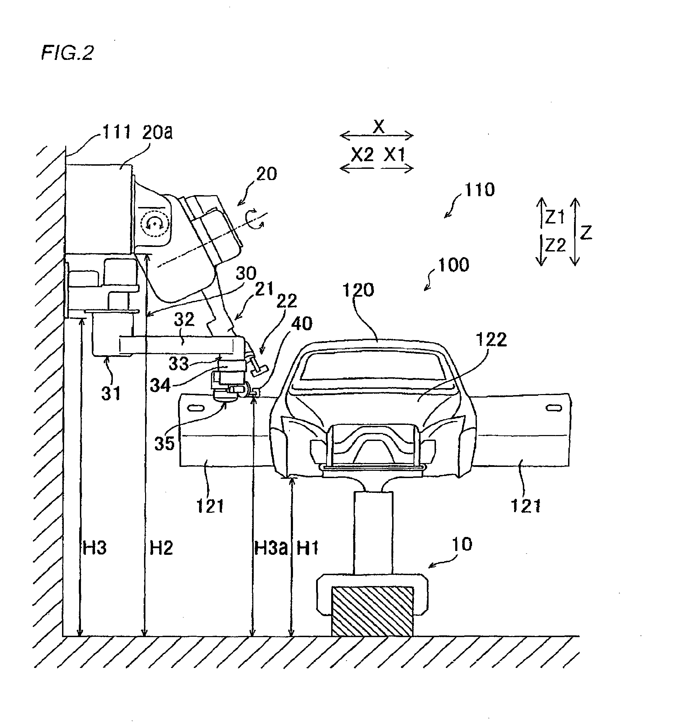

The conveyor 10 is provided to extend linearly in the prescribed transport direction (direction Y2) in the paint booth 110. As shown in Fig. 2, the conveyor 10 is formed to transport the body 120 in the transport direction in a state of holding the body 120 at a prescribed height H1. The body 120 is continuously transported at a prescribed constant speed with no interruption in the painting step. Therefore, the painting of the inner portion of the door 121 is performed while the conveyor 10 transports the body 120 from an upstream side to a downstream side at the constant speed.

The painting robot 20 protrudes in the direction X1 (toward the body 120) at a height H2 and is fixed onto a sidewall 111 of the paint booth 110 through a fixing mount 20a. The painting robot 20 is a 6-shaft (6 degrees of freedom) vertical multi-joint type robot, for example and includes an arm portion 21 and a painting gun 22 provided on an end of the arm portion 21. The painting robot 20 moves the painting gun 22 to an arbitrary position and in an arbitrary direction in a range of movement of the arm portion 21 while spraying paint from the painting gun 22, whereby the painting of the inner portion of the door 121 can be performed. The painting robot 20 at the height H2 is located above the door opening/closing robot 30 at a height H3 and can spray paint on the door 121 from an upper position to a lower position when painting the inner portion of the door 121. The heights H2 and H3 are examples of the "first height" and the "second height" in the present invention, respectively.

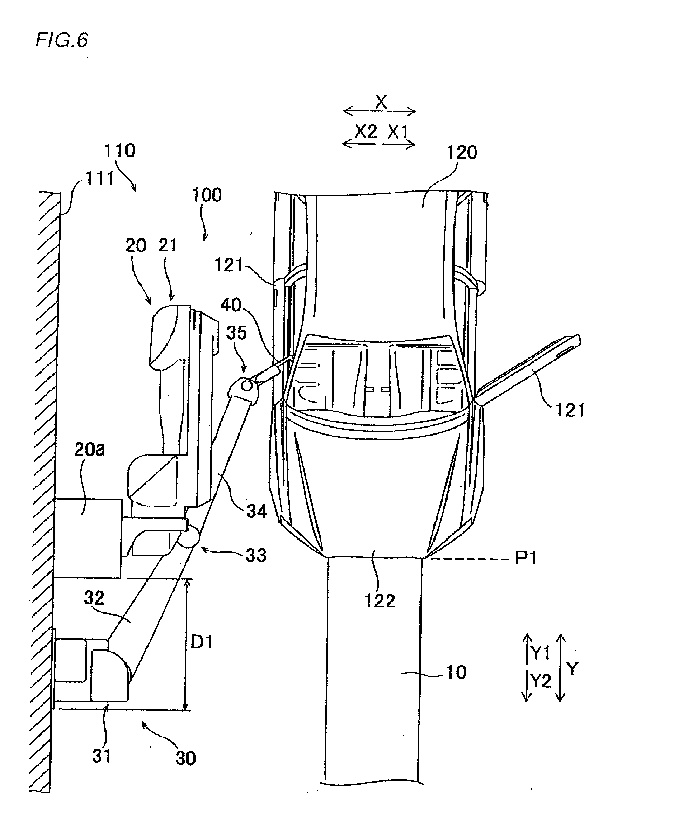

According to the first embodiment, the door opening/closing robot 30 protrudes in the direction X1 at the height H3 and is fixed onto the sidewall 111 of the paint booth 110. The door opening/closing robot 30 is a 2-link horizontal multi-joint type robot (so-called SCARA robot). The door opening/closing robot 30 is so formed that an operating range thereof can overlap with an operating range of the painting robot 20. The door opening/closing robot 30 is spaced apart by a distance D1 (see Fig. 6) from the painting robot 20 on the downstream side in the transport direction (in the direction Y2). The door opening/closing robot 30 is formed to open and close the door 121 at a timing when a painting operation can be efficiently performed and perform an operation for keeping the door 121 in an open state while following transport (movement) of the body 120 in the painting operation by the painting robot 20. The door opening/closing robot 30 is so formed that a range of horizontal movement thereof is larger than that of the painting robot 20.

As shown in Fig. 1, the door opening/closing robot 30 includes a first joint 31, a first arm (link) 32, a second joint 33, a second arm (link) 34, a third joint (wrist joint) 35 and an opening/closing hand 40 provided on the third joint 35.

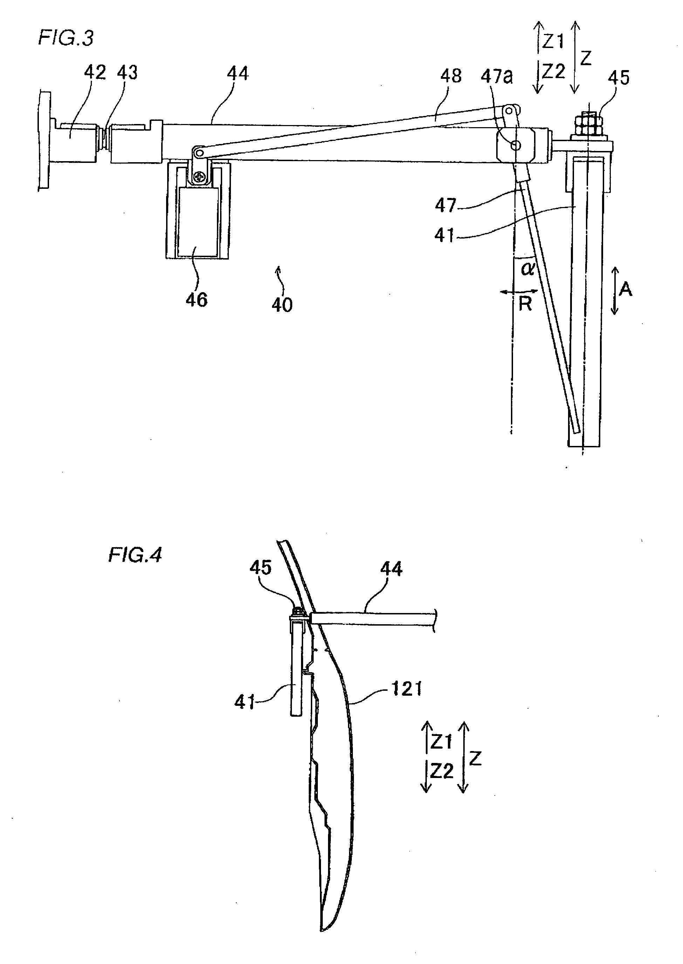

The first joint 31 is mounted on the sidewall 111 of the paint booth 110 and formed to rotatably support the first arm 32 in a horizontal plane. The second joint 33 is provided on a forward end of the first arm 32. The second arm 33 is formed to rotatably support the second arm 34 in the horizontal plane. The third joint 35 is provided on a forward end of the second arm 34. The third joint 35 is provided with a mounting base 42 (see Fig. 3) of the opening/closing hand 40 described later. This third joint 35 has a wrist bending shaft (pivot) for rotating the opening/closing hand 40 in the horizontal plane and a wrist rotating shaft (rotating shaft) for rotating the opening/closing hand 40 about the shaft in a vertical plane.

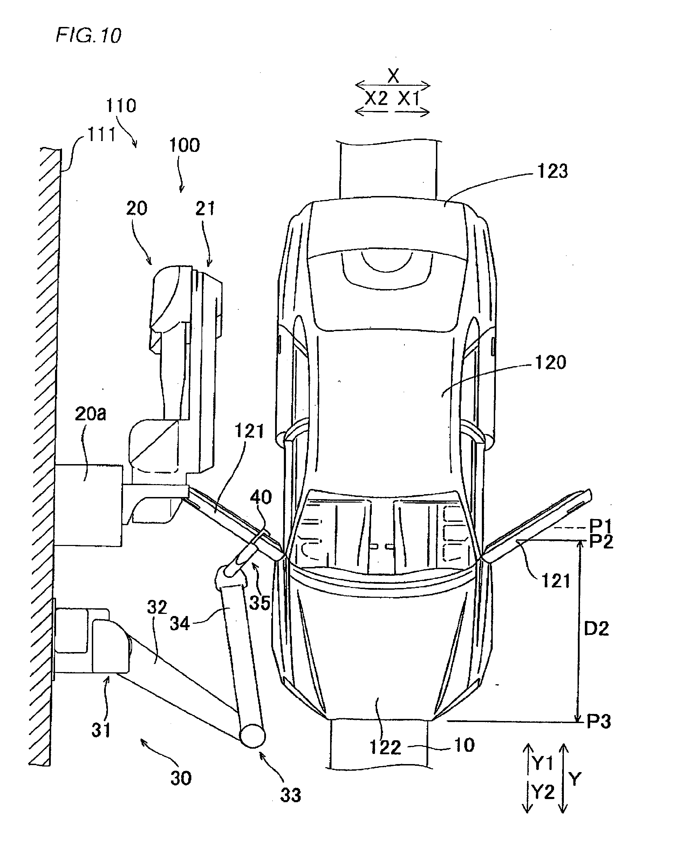

The door opening/closing robot 30 folds or unfolds these first arm 32 and second arm 34 thereby having a range of movement (a range of horizontal movement) larger than a distance in which the conveyor 10 transports the body 120 during a paining step of the inner portion of the door 121. More specifically, the door opening/closing robot 30 is formed to have a range of movement allowing the door 121 to be kept in an open state while following the body 120 transported by the conveyor 10 over a range (a range in a horizontal direction and the transport direction) of a distance D2 (see Fig. 10) in which the body 120 is moved during the painting of the inner portion of the door 121.

As shown in Fig. 2, the door opening/closing robot 30 arranged at the height H3 is so formed that a height of the opening/closing hand 40 is substantially equal to a height H3a of a lower end of a window portion of the door 121 of the body 120. Thus, the opening/closing hand 40 can open and close the door 121 without providing a vertical shaft (Z shaft) on the door opening/closing robot 30.

As shown in Fig. 3, the opening/closing hand 40 includes a stick-shaped attraction implement 41 in which a plurality of permanent magnets 41a are stacked and formed to open and close the door 121 and keep the same in an open state by attracting an inner surface of the door 121 of the body 120 by magnetic force of the attraction implement 41 (see Fig. 4). The opening/closing hand 40 has the mounting base 42 connected with the third joint 35, a base support post 44 coupled to the mounting base 42 through a shear pin 43 and a rotation mechanism portion 45 mounted on an end of the base support post 44 and supporting the attraction implement 41. Further, the opening/closing hand 40 has an open/close sensor 46 for detecting the presence of the door 121, a detecting lever 47 and a link 48 coupling the detecting lever 47 and the open/close sensor 46 with each other. The open/close sensor 46 is an example of the "mechanical sensor" in the present invention.

An end of the base support post 44 closer to a base of the opening/closing hand 40 is coupled to the mounting base 42 through the shear pin 43. The shear pin 43 is formed to inhibit application of an excessive load to the opening/closing hand 40 by its breakage when largely loaded and prevent breakage of the opening/closing hand 40. A hollow portion (not shown) is formed inside the shear pin 43, and the shear pin 43 is so formed that prescribed air pressure is applied to this hollow portion. When the shear pin 43 is broken, the air pressure is reduced by releasing air in the hollow portion. On the basis of this change of the air pressure, the breakage of the shear pin 43 can be detected. The shear pin 43 is an example of the "load inhibiting portion" in the present invention.

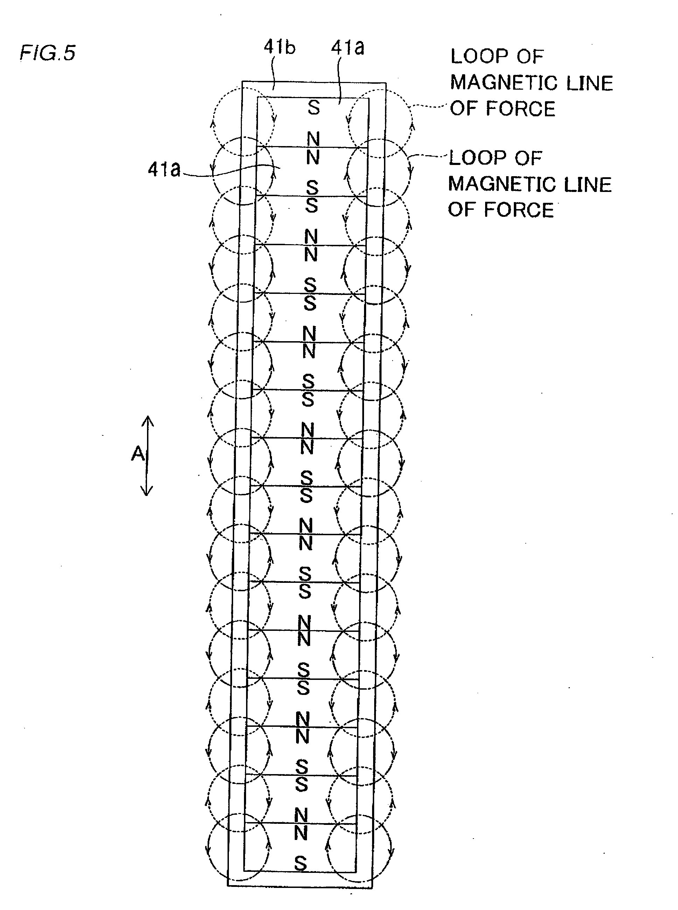

As shown in Fig. 5, the attraction implement 41 has a tubular and nonmagnetic stainless-steel cover 41b. The plurality of permanent magnets 41a are stacked in this stainless-steel cover 41b. The plurality of permanent magnets 41a stacked in the attraction implement 41 are stacked such that the same magnetic poles of adjacent permanent magnets 41a face each other along a stacking direction (direction A) in the stainless-steel cover 41b. In other words, the permanent magnets 41a are stacked such that north poles of adjacent permanent magnets 41a face each other and south poles of another adjacent permanent magnets 41a face each other along the direction A and formed such that the adjacent permanent magnets 41a repel each other. Consequently, loops of magnetic lines of force are formed with respect to each permanent magnet 41a in the attraction implement 41. The attraction implement 41 is formed to be capable of obtaining substantially constant attraction (magnetic force) by these loops of magnetic lines of force anywhere in attracting sites (in the direction A) of the stick-shaped attraction implement 41.

As shown in Fig. 3, the attraction implement 41 is formed to be capable of being rotated about a long axis (central axis in the direction A) of the stick-shaped attraction implement 41 by the rotation mechanism portion 45 mounted on the end of the base support post 44. As shown in Fig. 4, the inner surafce (surface) of the door 121 is formed in a complicated irregular shape, and hence the attraction implement 41 is rotated about the central axis by the rotation mechanism portion 45, whereby the attraction implement 41 can be in contact with an attracted surface (or an attracted point) of the inner portion of the door 121 vertically. According to this structure, the opening/closing hand 40 opens the door 121 while attracting the inner surface of the door 121 by the attraction implement 41 and closes the door 121 while attracting an inner surface side of the door 121 by attraction. The permanent magnets 41a of the attraction implement 41 each are made of a magnet having strong magnetic force (such as a neodymium magnet). Therefore, the opening/closing hand 40 is formed to be capable of opening and closing the door 121 by attracting the same also in a state where the attraction implement 41 and the door 121 are not in contact with each other but slightly separated from each other when opening and closing the door 121.

The open/close sensor 46 of the opening/closing hand 40 is constituted by a mechanical limit switch. The detecting lever 47 coupled with the open/close sensor 46 through the link 48 is formed to be capable of rotating in a direction R about a rotational portion 47a and provided to incline by a prescribed angle α on a fingertip side (side on which the attraction implement 41 is arranged) with respect to a vertical direction. Thus, the detecting lever 47 rotates about the rotational portion 47a when coming into contact with an outer surface of the door 121 in opening the door 121, thereby turning on the open/close sensor 46 through the link 48 (detecting the presence of the door 121). In Fig. 4, illustrations of the open/close sensor 46, the detecting lever 47 and the link 48 are omitted.

The painting operation of the painting system 100 according to the first embodiment of the present invention is now described with reference to Figs. 3, 4 and 6 to 10.

First, as shown in Fig. 6, the painting system 100 starts transport of the body 120 set on the conveyor 10 and moves the body 120 at the constant speed in the direction Y2 (transport direction) from the upstream side. The body 120 is continuously transported at the constant speed with no interruption until completion of the painting operation.

When the body 120 transported by the conveyor 10 reaches a prescribed start position P1, the door opening/closing robot 30 opens the door 121 while continuing to transport the body 120. More specifically, the attraction implement 41 of the opening/closing hand 40 is rotated to be substantially horizontal by the third joint 35 of the door opening/closing robot 30 while the first arm 32 and the second arm 34 of the door opening/closing robot 30 are unfolded, whereby the attraction implement 41 provided on an end of the opening/closing hand 40 goes through the window portion of the door 121. At this time, as shown in Fig. 3, the detecting lever 47 is in contact with the outer surface of the door 121, and the open/close sensor 46 detects rotation of the detecting lever 47 through the link 48, whereby the presence of the door 121 is detected.

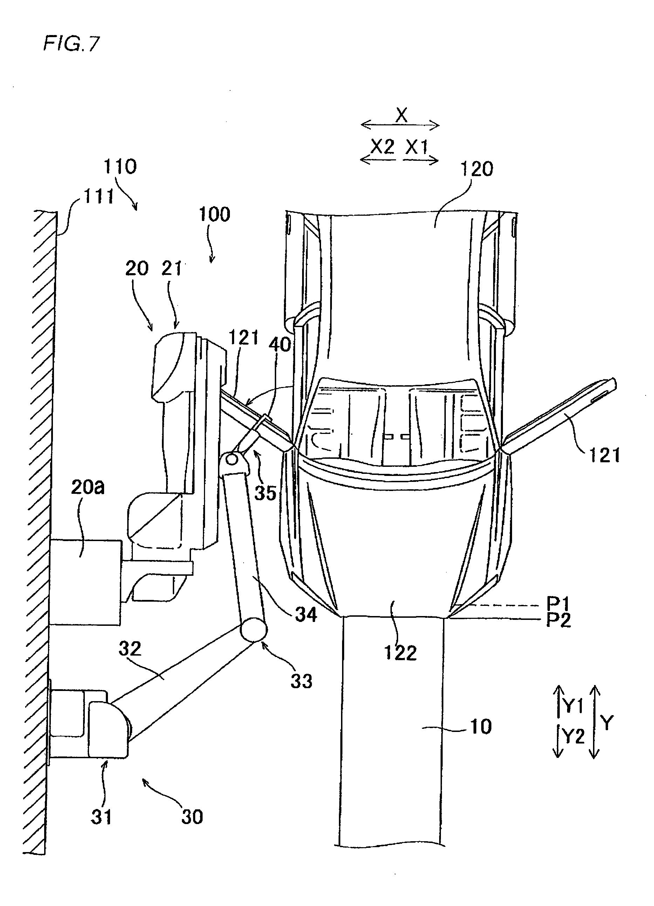

Thereafter, as shown in Fig. 4, the third joint 35 returns the attraction implement 41 to a substantial vertical state on the basis of the detection of the door 121 by the open/close sensor 46, and the inner surface of the door 121 is attracted by attraction (magnetic force) of the attraction implement 41. As shown in Fig. 7, the first arm 32 and the second arm 34 of the door opening/closing robot 30 are driven to be folded in this state, and the door 121 is opened while attracting the inner surface of the door 121 by the attraction implement 41. At this time, a center of an arcuate path previosuly set as an open/close operation of the door opening/closing robot 30 and a center of an arcuate path of the door 121 in opening the same may be deviated from each other due to positional deviation or the like of the body 120 placed on the conveyor 10. Also in this case, the attraction implement 41 can slide on the inner surface of the door 121 while attracting (suctioning) the door 121 by magnetic force without fixing the attraction implement 41 and the door 121 onto each other, and hence application of excessive force to the opening/closing hand 40 due to deviation between the path of the rotating door 121 and a path of the opening/closing hand 40 can be prevented. As shown in Fig. 7, the body 120 advances to a position P2 when the door 121 is opened.

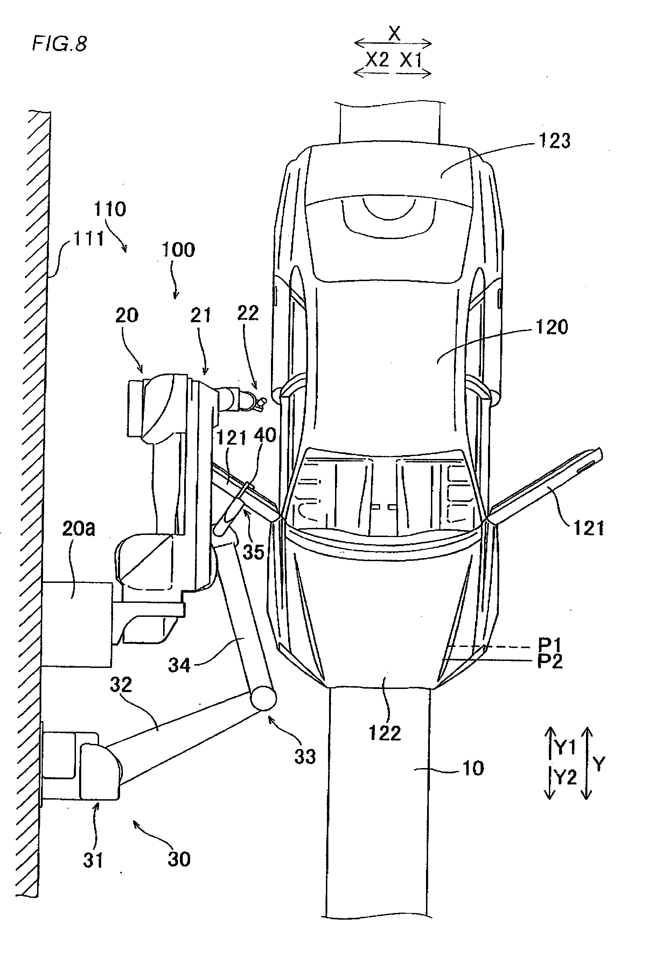

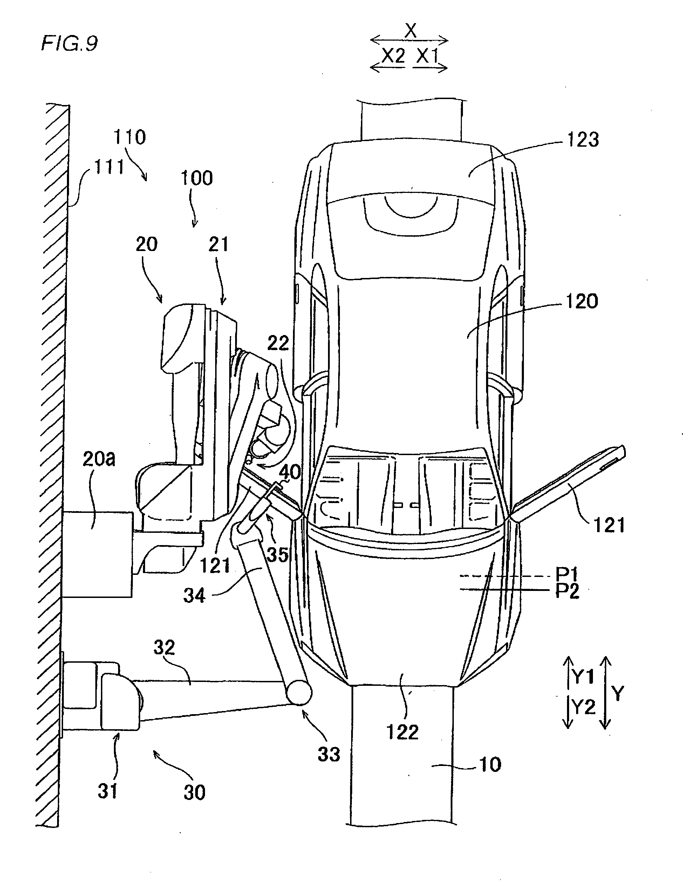

After the door 121 is opened, the painting robot 20 is driven to start the painting of the inner portion of the door 121 of the body 120. At this time, as shown in Figs. 8 and 9, the first arm 32 and the second arm 34 of the door opening/closing robot 30 are driven to follow the body 120 moved at the constant speed, thereby keeping the door 121 in an open state. The painting robot 20 is also driven to follow the body 120 by the arm portion 21, thereby performing the painting of the inner portion of the door 121 while the body 120 is transported in the direction Y2. Therefore, the painting robot 20 and the door opening/closing robot 30 performs the painting of the inner portion of the door 121 and keeps the door 121 in an open state, respectively while following the transported body 120 and changing respective postures.

Thereafter, the painting of the inner portion of the door 121 of the body 120 by the painting robot 20 is completed, as shown in Fig. 10. The body 120 transported by the conveyor 10 travels only the distance D2 from the position P2 to a position P3 on the downstream side (in the direction Y2) during the painting of the inner portion of the door 121. Thus, the door opening/closing robot 30 of the painting system 100 according to the first embodiment keeps the door 121 in an open state while following the movement of the body 120 over at least the distance D2. Further, the door opening/closing robot 30 keeping the door 121 in an open state while following the movement of the body 120 closes the door 121 of the body 120. Thus, the painting step of the door 121 is completed.

According to the first embodiment, as hereinabove described, the painting system 100 is provided with the painting robot 20 fixedly set at the height H2 and painting the inner portion of the door 121 of the body 120 while changing the posture to follow the transport of the body 120 by the conveyor 10 and the door opening/closing robot 30 fixedly set at the height H3 different from the height H2, so formed that the operating range thereof can overlap with the operating range of the painting robot 20, and opening and closing the door 121 of the body 120 and keeping the door 121 in an open state while changing the posture to follow the transport of the body 120 by the conveyor 10, whereby the inner portion of the door 121 of the body 120 can be painted without moving the painting robot 20 and the door opening/closing robot 30. Hence, the inner potion of the door 121 can be painted without a traveling device. Further, the operating range of the painting robot 20 set at the height H2 and the operating range of the door opening/closing robot 30 set at the height H3 different from the height H2 can be overlapped with each other, and hence the painting robot 20 and the door opening/closing robot 30 can easily paint the inner portion of the door 121 of the body 120 and keep the door 121 in an open state, respectively. Consequently, the traveling device is not required in the painting system 100 according to the first embodiment, and hence no maintenance of the traveling device is needed while the structure of the paint booth 110 can be simplified and downsized.

According to the first embodiment, as hereinabove described, the door opening/closing robot 30 is constituted by a horizontal multi-joint type robot, whereby the range of movement of the door opening/closing robot 30 can be enlarged in the horizontal direction by folding and unfolding of the first and second arms 32 and 34 in the horizontal direction, which is a characteristic of a horizontal multi-joint type robot. Consequently, the door opening/closing robot 30 can easily open and close the door 121 of the body 120 and keep the door 121 in an open state while following the transport of the body 120 by the conveyor 10 also in the structure having the door opening/closing robot 30 fixedly set.

According to the first embodiment, as hereinabove described, the door opening/closing robot 30 is arranged at the height H3 such that the height (a position of a fingertip) of the opening/closing hand 40 of the door opening/closing robot 30 is substantially equal to the height H3a of the door 121 of the body 120 transported by the conveyor 10, whereby the door 121 of the body 120 can be opened/closed by simply driving the horizontal multi-joint type door opening/closing robot 30 in the horizontal direction, and hence no drive shaft in the vertical direction (direction Z) is required in the horizontal multi-joint type door opening/closing robot 30.

According to the first embodiment, as hereinabove described, the painting robot 20 is fixedly set at the height H2 on the sidewall 111 of the paint booth 110 while the door opening/closing robot 30 is fixedly set at the height H3 on the sidewall 111 of the paint booth 110, whereby a traveling device, support poles for supporting the painting robot 20 and the door opening/closing robot 30 and so on are not required in the paint booth 110, and hence a distance from the body 120 to the sidewall 111 of the paint booth 110 can be reduced. Consequently, the whole paint booth 110 can be downsized.

According to the first embodiment, as hereinabove described, the painting robot 20 is fixedly set on the sidewall 111 of the paint booth 110 through the fixing mount 20a, whereby the painting robot 20 can be easily fixed onto the sidewall 111 of the paint booth 110 with the fixing mount 20a also when a support post for supporting the painting robot 20 or the like is not provided in the paint booth 110.

According to the first embodiment, as hereinabove described, the painting robot 20 is set at the height H2 above the height H3 of the door opening/closing robot 30, whereby the painting robot 20 can perform painting at the height H2 above the door opening/closing robot 30 set at the height H3. At this time, the painting operation such as spray of paint by the painting robot 20 is performed downward from the height H2 in the paint booth 110 where a down flow (airflow downward from above) is formed by the air conditioner, whereby adhesiveness of paint can be improved, and hence workability for painting can be improved.

According to the first embodiment, as hereinabove described, the horizontal multi-joint type door opening/closing robot 30 and the vertical multi-joint type painting robot 20 are provided while the range of horizontal movement of the door opening/closing robot 30 is rendered larger than the range of horizontal movement of the painting robot 20, whereby the range of movement of the door opening/closing robot 30 which must operate for opening and closing the door 121 can be rendered larger than the range of movement (range of the painting operation) of the painting robot 20 also before and after painting. Thus, the door opening/closing robot 30 can reliably open the door 121 before painting the body 120, keep the door 121 in an open state during painting of the body 120 and close the door 121 after painting the body 120.

According to the first embodiment, as hereinabove described, the door opening/closing robot 30 is arranged on the downstream side in the direction (direction Y2) in which the body 120 is transported by the conveyor 10 with respect to the painting robot 20, whereby the painting robot 20 arranged on the upstream side in the transport direction can perform painting on the upstream side while the door opening/closing robot 30 arranged on the downstream side in the transport direction can open and close the door 121 and keep the door 121 in an open state on the downstream side in a case where the inside of the door 121 is located on the upstream side in the transport direction for the body 120 (in the direction Y1) when opening the door 121. Thus, the painting operation can be easily performed.

According to the first embodiment, as hereinabove described, the painting system 100 is so formed that the range of movement of the door opening/closing robot 30 in the horizontal direction and the direction Y2 (transport direction) is larger than the distance D2 in which the conveyor 10 moves the body 120 during the painting of the inner portion of the door 121 of the body 120 by the painting robot 20. Thus, the painting of the inner portion of the door 121 of the body 120 can be performed while continuously transporting the body 120 at the constant speed without temporarily stopping transport of the body 120 by the conveyor 10 or changing a transported speed of the body 120 also in the structure having the painting robot 20 and the door opening/closing robot 30 both fixedly set without a traveling device.

According to the first embodiment, as hereinabove described, the plurality of permanent magnets 41a of the attraction implement 41 of the opening/closing hand 40 are stacked such that the same magnetic poles of the adjacent permanent magnets 41a face each other along the stacking direction (direction A). According to this structre, magnetic fields in opposite directions can be formed at each of portions of the attraction implement 41 where the same magnetic poles face each other. Thus, a plurality of the magnetic fields are arranged in the stacking direction (direction A), and hence dispersion of attraction of the sites (in the direction A) of the attraction implement 41 can be reduced. Consequently, the door 121 can be stably attracted anywhere in the attracting sites of the attraction implement 41 by the opening/closing hand 40 having the attraction implement 41 with small dispersion of attraction, and hence the door opening/closing robot 30 can more reliably open and close the door 121 of the body 120.

According to the first embodiment, as hereinabove described, the mechanical open/close sensor 46 for detecting the door 121 of the body 120 is provided on the opening/closing hand 40, whereby the door 121 of the body 120 can be accurately detected without influences of the magnetic fields or the like, dissimilarly to a case of a proximity sensor or the like susceptible to the magnetic fields or the like generated from the attraction implement 41.

According to the first embodiment, as hereinabove described, the attraction implement 41 is formed in a stick shape, and the rotation mechanism portion 45 supporting the attraction implement 41 while allowing the attraction implement 41 to rotate about the long axis (central axis in the direction A) of the attraction implement 41 is provided on the opening/closing hand 40, whereby the attraction implement 41 can come into contact with the inner surface of the door 121 of the body 120 formed in a complicated irregular shape vertically by rotating the attraction implement 41 about the central axis by the rotation mechanism portion 45. Thus, the attraction implement 41 can more reliably attract the door 121 of the body 120.

According to the first embodiment, as hereinabove described, the shear pin 43 inhibiting application of an excessive load to the opening/closing hand 40 when the opening/closing hand 40 is largely loaded is provided on the opening/closing hand 40, whereby the opening/closing hand 40 can be inhibited from breakage also when the opening/closing hand 40 is excessively loaded.

According to the first embodiment, as hereinabove described, the detecting lever 47 coupled to the open/close sensor 46 is provided on the opening/closing hand 40 is provided on the opening/closing hand 40 and formed to detect the door 121 of the body 120 by contact of the detecting lever 47 with the outer surface of the door 121 of the body 120, whereby the simple structure having the detecting lever 47 coupled to the open/close sensor 46 allows the open/close sensor 46 to detect the door 121 of the body 120.

### (Second Embodiment)

Next, a painting system 200 according to a second embodiment of the present invention is described with reference to Figs. 2 and 11 to 14. A painting robot 20 and a door opening/closing robot 30 are arranged to overlap with each other vertically in the painting system 200 according to the second embodiment, dissimilarly to the aforementioned first embodiment in which the painting robot 20 and the door opening/closing robot 30 are spaced apart by the distance D1 from each other in the transport direction (direction Y2).

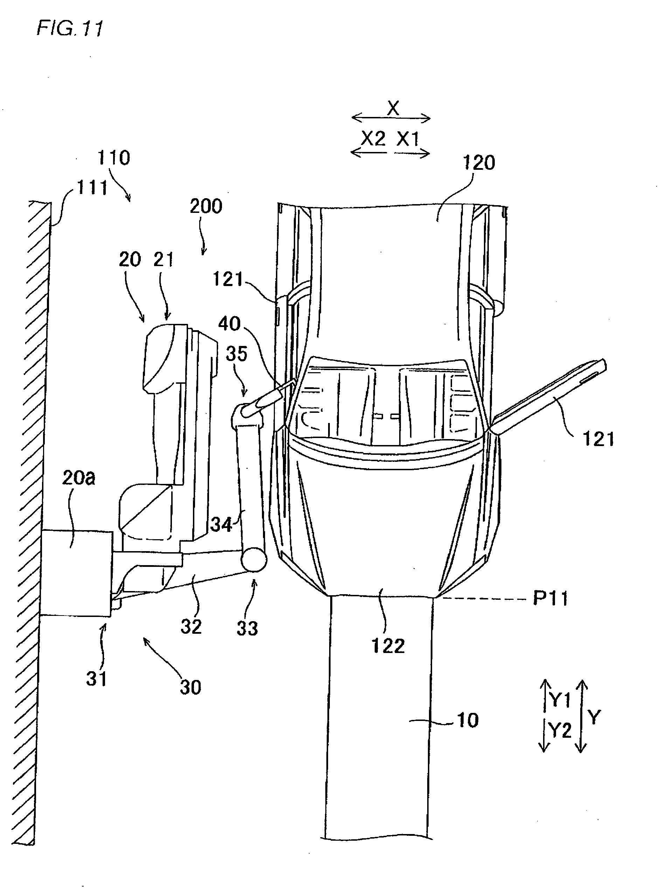

In the painting system 200 according to the second embodiment, as shown in Fig. 11, the painting robot 20 fixedly set at the height H2 (see Fig. 2) and the door opening/closing robot 30 fixedly set at the height H3 (see Fig. 2) are arranged at the same position in a horizontal direction (transport direction, direction Y) to overlap with each other vertically. The painting system 200 is so formed that a horizontal operating range of the painting robot 20 overlaps with a horizontal operating range of the door opening/closing robot 30.

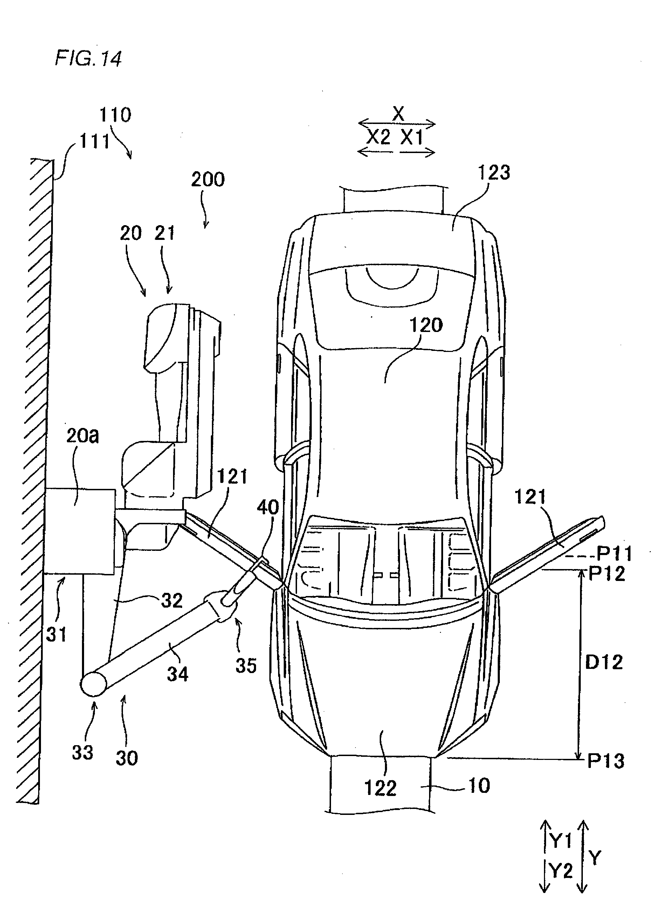

The door opening/closing robot 30 is formed to be capable of opening and closing a door 121 and keeping the door 121 in an open state during painting of an inner portion of the door 121 while following a body 120 transported at a constant speed by a conveyor 10. More specifically, the door opening/closing robot 30 is formed to be capable of keeping the door 121 in an open state over a range (a range in the horizontal direction and the transport direction) of a distance D12 (see Fig. 14) in which the body 120 is moved during the painting of the inner portion of the door 121 by the painting robot 20. The door opening/closing robot 30 is formed to be capable of keeping the door 121 in an open state and closing the door 121 also in a state where the conveyor 10 has advanced the door 121 of the body 120 to a downstream side in the transport direction (on a side in the direction Y2) with respect to the door opening/closing robot 30.

The remaining structure of the second embodiment is similar to that of the aforementioned first embodiment.

A painting operation of the painting system 200 according to the second embodiment is now described with reference to Figs. 11 to 14.

As shown in Fig. 11, the painting system 200 starts transport of the body 120 set on the conveyor 10 and moves the body 120 at the constant speed in the direction Y2 from an upstream side in the transport direction. The body 120 is continuously transported at the constant speed with no interruption until completion of the painting operation.

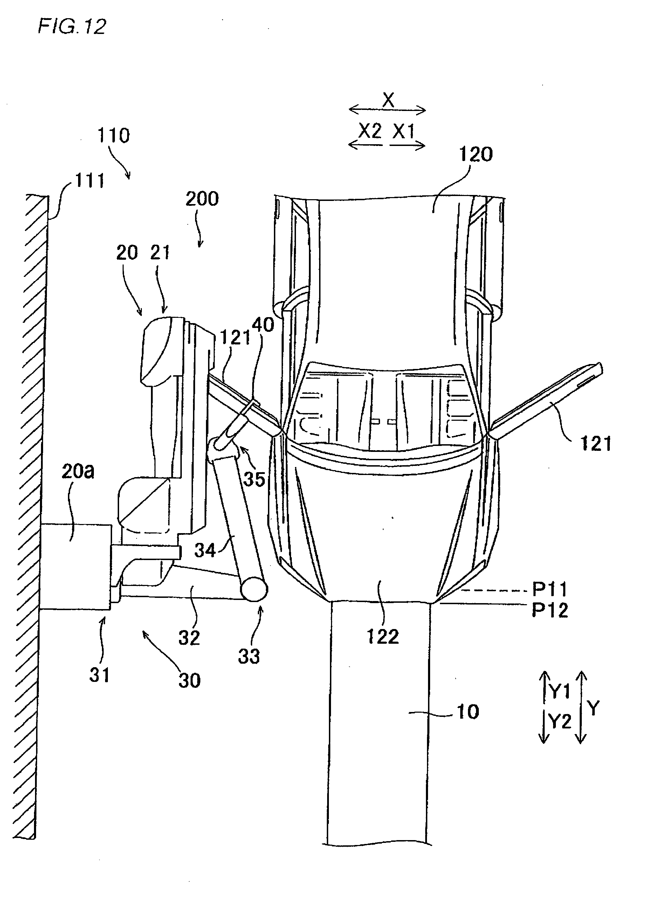

When the body 120 transported by the conveyor 10 reaches a prescribed start position P11, the door opening/closing robot 30 opens the door 121 while continuing to transport the body 120. Thus, the door 121 is opened, and the door opening/closing robot 30 keeps the door 121 in an open state. A door open operation is similar to that of the aforementioned first embodiment. As shown in Fig. 12, the body 120 advances to a position P12 when the door 121 is opened.

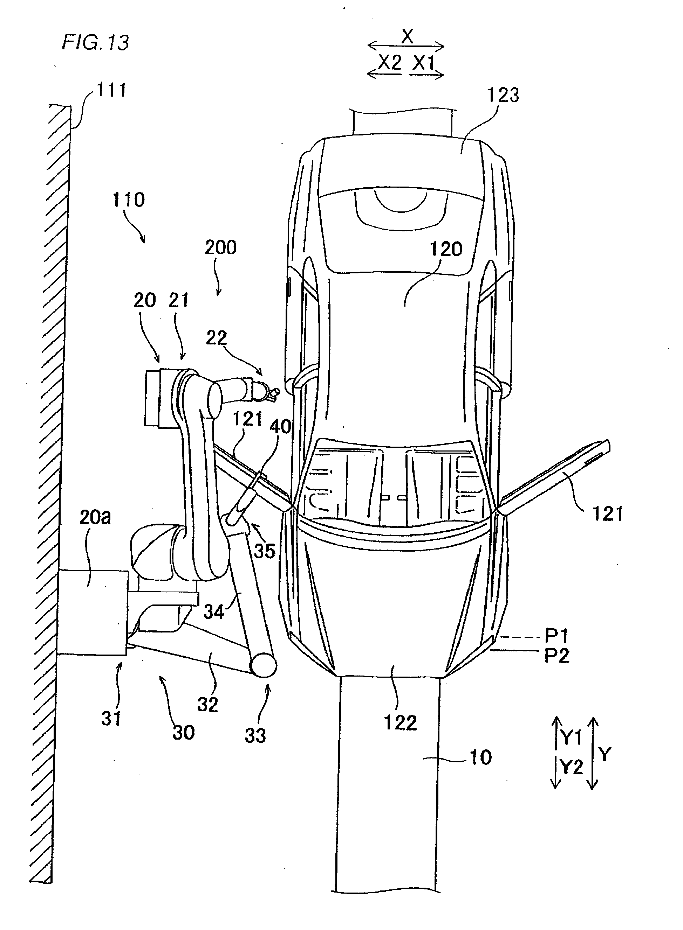

As shown in Fig. 13, the painting robot 20 is driven to start the painting of the inner portion of the door 121 of the body 120 after the door 121 is opened. The painting robot 20 and the door opening/closing robot 30 performs the painting of the inner portion of the door 121 and keeps the door 121 in an open state, respectively while following the transported body 120 and changing respective postures.

Thereafter, the painting of the inner portion of the door 121 of the body 120 by the painting robot 20 is completed, as shown in Fig. 14. The body 120 transported by the conveyor 10 travels only the distance D12 from the position P12 to a position P13 on the downstream side (in the direction Y2) during the painting of the inner portion of the door 121. According to the second embodiment, the painting robot 2 and the door opening/closing robot 30 are arranged to overlap with each other vertically, and hence the door opening/closing robot 30 is relatively arranged on the upstream side (in a direction Y1), as compared with the first embodiment in which the door opening/closing robot 30 is arranged on the downstream side (in the direction Y2) by the distance D1 with respect to the painting robot 20. Therefore, according to the second embodiment, the door opening/closing robot 30 keeps the door 121 in an open state by effectively using a large range of movement of the horizontal multi-joint type door opening/closing robot 30 in the horizontal direction also in a state where a hinge position of the door 121 has passed through a position of the door opening/closing robot 30. Thus, the door opening/closing robot 30 can keep the door 121 in an open state within the distance D12 in which the body 120 is moved with no interruption during the painting of the inner portion of the door 121. After completion of the painting of the inner portion of the door 121, the door opening/closing robot 30 keeping the door 121 in an open state while following movement of the body 120 closes the door 121 of the body 120. Thus, a painting step of the door 121 is completed.

According to the second embodiment, as hereinabove described, the door opening/closing robot 30 is formed to be capable of keeping the door 121 in an open state in a state where a position of the door 121 of the body 120 transported in the transport direction of the conveyor 10 (in the direction Y2) has moved beyond a set position of the door opening/closing robot 30 in the transport direction (direction Y2), whereby the painting robot 20 can perform a painting operation also in a state where the transported body 120 has moved beyond the set position of the door opening/closing robot 30 to the downstream side in the transport direction (direction Y2). Consequently, the door 121 can be easily kept in an open state over a long distance, and hence the door 121 can be easily kept in an open state for the time required to perform the paint operation without increasing the robot in size, as compared with a case of performing the painting operation only on the upstream side with respect to the set position of the door opening/closing robot 30.

According to the second embodiment, the painting robot 20 and the door opening/closing robot 30 are arranged to overlap with each other vertically, whereby a region where the robots for painting the door 121 are set (a distance between the robots for painting the door 121 in the transport direction) can be reduced. Therefore, when robots painting an inner portion of a trunk hood 123 and opening and closing the trunk hood 123 and robots painting an inner portion of an engine hood 122 and opening and closing the engine hood 122 are arranged along the transport direction, for example, intervals between the robots in the transport direction can be reduced. Consequently, when building a painting system performing an entire inner plate painting step by employing the painting system 200 according to the second embodiment, a distance in the transport direction required to build the painting system can be reduced, and hence the paint booth can be downsized (a length of the paint booth can be reduced).

The remaining effects of the second embodiment are similar to those of the aforementioned first embodiment.

Although the present invention has been described and illustrated in detail, it is clearly understood that the same is by way of illustration and example only and is not to be taken by way of limitation, the scope of the present invention being limited only by the terms of the appended claims.

For example, while the painting robot paints only the inner portion of the door in each of the aforementioned first and second embodiments, the present invention is not restricted to this. The present invention may alternatively be applied to a case where the painting robot paints an outer portion of the door.

While the horizontal multi-joint type door opening/closing robot is provided in each of the aforementioned first and second embodiments, the present invention is not restricted to this. In the present invention, a door opening/closing robot other than a horizontal multi-joint type may alternatively be provided. The door opening/closing robot may alternatively be a robot having any structure, so far as the door opening/closing robot can open and close a door and keep the door in an open state while following transport of a body in a state where the door opening/closing robot is fixedly set at the second height.

While the door opening/closing robot 30 is arranged at the height H3 such that the height of the opening/closing hand 40 is substantially equal to the height H3a of the lower end of the window portion of the door 121 of the body 120 in each of the aforementioned first and second embodiments, the present invention is not restricted to this. In the present invention, the door opening/closing robot may alternatively be arranged at a height different from the height of the door 121. In this case, the door opening/closing robot may be formed to have a range of movement in the vertical direction allowing the same to open and close the door.

While the painting robot 20 and the door opening/closing robot 30 are fixedly set on the sidewall 111 of the paint booth 110 in each of the aforementioned first and second embodiments, the present invention is not restricted to this. In the present invention, support posts or the like for fixing the robots may alternatively be provided in the paint booth to fix the painting robot and the door opening/closing robot onto these support posts, for example.

While the painting robot 20 is set at the height H2 above the height H3 at which the door opening/closing robot 30 is set in each of the aforementioned first and second embodiments, the present invention is not restricted to this. In the present invention, the painting robot may alternatively be set below the door opening/closing robot.

While the painting robot 20 is constituted by a 6-shaft (6 degrees of freedom) vertical multi-joint type robot, and the door opening/closing robot 30 is constituted by a 2-link horizontal multi-joint type robot in each of the aforementioned first and second embodiments, the present invention is not restricted to this. In the present invention, the painting robot may alternatively be constituted by a robot having not more than five shafts or more than six shafts, or the door opening/closing robot may alternatively be constituted by a horizontal multi-joint type robot having more than two links.

While the door opening/closing robot 30 is spaced apart by the distance D1 from the painting robot 20 on the downstream side in the transport direction (in the direction Y2) in the aforementioned first embodiment, the present invention is not restricted to this. In the present invention, the door opening/closing robot may alternatively be arranged on the upstream side in the transport direction with respect to the painting robot.

While the plurality of permanent magnets 41a stacked in the attraction implement 41 are stacked such that the same magnetic poles of the adjacent permanent magnets 41a face each other along the stacking direction (direction A) in each of the aforementioned first and second embodiments, the present invention is not restricted to this. In the present invention, a plurality of sets of two or three permanent magnets arranged such that magnetic poles different from each other are adjacent to each other (arranged to attract each other) may be provided, and these sets may be stacked such that the same magnetic poles face each other (to repel each other) along the stacking direction (direction A).

While the open/close sensor 46 for detecting the presence of the door 121 is constituted by a mechanical limit switch in each of the aforementioned first and second embodiments, the present invention is not restricted to this. In the present invention, the open/close sensor may alternatively be constituted by another mechanical switch other than a limit switch. Alternatively, the open/close sensor may be constituted by another type sensor other than a mechanical sensor.

## Claims

1. A painting system (100, 200) comprising:
a body transport device (10) transporting a body (120);
a painting robot (20) fixedly set at a first height (H2), painting at least an inner portion of a door (121) of said body while changing a posture to follow transport of said body by said body transport device; and
a door opening/closing robot (30) fixedly set at a second height (H3) different from said first height, so formed that an operating range thereof can overlap with an operating range of said painting robot, wherein said door opening/closing robot opens and closes said door of said body and keeps said door in an open state while changing a posture to follow the transport of said body by said body transport device, **characterized in that**:
said door opening/closing robot includes an attraction implement (41) in which a plurality of permanent magnets (41a) are stacked and is formed to attract said door of said body by said attraction implement for opening and closing the same; at least part of said plurality of permanent magnets of said attraction implement is stacked such that the same magnetic poles of adjacent said permanent magnets face each other along a stacking direction (A); and
said attraction implement is formed to be capable of obtaining constant magnetic force anywhere in attracting sites of said attraction implement.

2. The painting system according to claim 1, wherein said door opening/closing robot is a horizontal multi-joint type robot.

3. The painting system according to claim 2, wherein said door opening/closing robot is arranged at said second height such that a position of a fingertip of said door opening/closing robot is equal to a height of said door of said body transported by said body transport device.

4. The painting system according to any one of claims 1 to 3, wherein said painting robot is fixedly set at said first height on a sidewall (111) of a paint booth (110) for said body, and said door opening/closing robot is fixedly set at said second height on said sidewall of said paint booth for said body.

5. The painting system according to claim 4, wherein said painting robot is fixedly set on said sidewall of said paint booth for said body through a fixing mount (20a).

6. The painting system according to any one of claims 1 to 5, wherein said first height at which said painting robot is set is positioned above said second height.

7. The painting system according to any one of claims 1 to 6, whereinsaid door opening/closing robot is a horizontal multi-joint type robot, said painting robot is a vertical multi-joint type robot, and a range of horizontal movement of said door opening/closing robot is larger than a range of horizontal movement of said painting robot.

8. The painting system according to any one of claims 1 to 7, wherein said door opening/closing robot is arranged on a downstream side in a direction (Y2) in which said body transport device transports said body with respect to said painting robot.

9. The painting system according to any one of claims 1 to 7, wherein said door opening/closing robot and said painting robot are arranged at such a position that said door opening/closing robot and said painting robot overlap with each other in plan view.

10. The painting system according to any one of claims 1 to 9, wherein a range of movement of said door opening/closing robot in a horizontal direction and a transport direction for said body is larger than a distance in which said body transport device moves said body during painting of said inner portion of said door of said body by said painting robot.

11. The painting system according to any one of claims 1 to 10, wherein said door opening/closing robot is formed to be capable of keeping said door in an open state in a state where a position of said door of said body transported in a transport direction of said body transport device has advanced in said transport direction with respect to a position where said door opening/closing robot is set.

12. The painting system according to any one of claims 1 to 11, wherein,
said door opening/closing robot includes an opening/closing hand (40) for opening and closing said door of said body,
said opening/closing hand has an attraction implement (41) in which a plurality of permanent magnets (41a) are stacked and is formed to attract said door of said body by said attraction implement for opening and closing the same, and
at least part of said plurality of permanent magnets of said attraction implement is stacked such that the same magnetic poles of adjacent said permanent magnets face each other along a stacking direction (A).

13. The painting system according to claim 12, wherein said opening/closing hand further has a mechanical sensor (46) for detecting said door of said body.

14. The painting system according to claim 12 or 13, wherein
said attraction implement is formed in a stick shape, and
said opening/closing hand further has a rotation mechanism portion (45) supporting said attraction implement while allowing said attraction implement to rotate about a long axis of said attraction implement.

15. The painting system according to any one of claims 12 to 14, wherein said opening/closing hand further has a load inhibiting portion (43) inhibiting application of excessive load to said opening/closing hand when largely loaded.

## Patentansprüche

1. Anstreich- bzw. Lackiersystem (100, 200), das umfasst:
eine Karosserietransportvorrichtung (10), die eine einen Körper bzw. eine Karosserie (120) transportiert;
einen Lackierroboter (20), der auf einer ersten Höhe (H2) fest eingerichtet ist, der wenigstens einen inneren Abschnitt einer Tür (121) der Karosserie lackiert, während eine Stellung geändert wird, um dem Transport der Karosserie durch die Karosserietransportvorrichtung zu folgen; und
einen Türöffnungs-/Schließroboter (30), der fest auf einer zweiten Höhe (H3), die sich von der ersten Höhe unterscheidet, eingerichtet ist, der derart ausgebildet ist, dass sein Betriebsbereich mit einem Betriebsbereich des Lackierroboters überlappen kann, wobei der Türöffnungs-/Schließroboter die Tür der Karosserie öffnet und schließt und die Tür in einem offenen Zustand hält, während eine Stellung geändert wird, um dem Transport der Karosserie durch die Karosserietransportvorrichtung zu folgen, **dadurch gekennzeichnet, dass**
der Türöffnungs-/Schließroboter (30) ein Anziehungshilfsmittel (41) umfasst, in dem eine Vielzahl von Permanentmagneten (41 a) gestapelt sind und das ausgebildet ist, um die Tür der Karosserie durch das Anziehungshilfsmittel (41) anzuziehen, um diese zu öffnen und zu schließen; wenigstens ein Teil der mehreren Permanentmagnete des Anziehungshilfsmittels (41) derart gestapelt ist, dass die gleichen Magnetpole, die benachbart zu den Permanentmagneten sind, einander entlang einer Stapelrichtung (A) gegenüber liegen; und
das Anziehungshilfsmittel derart ausgebildet ist, dass es fähig ist, an Anziehungsstellen des Anziehungshilfsmittels überall eine konstante Magnetkraft zu erreichen.

2. Lackiersystem nach Anspruch 1, wobei der Türöffnungs-/Schließroboter ein horizontaler Vielgelenkroboter ist.

3. Lackiersystem nach Anspruch 2, wobei der Türöffnungs-/Schließroboter derart auf der zweiten Höhe eingerichtet ist, dass eine Position einer Fingerspitze des Türöffnungs-/Schließroboters gleich einer Höhe der Tür der Karosserie ist, die von der Karosserietransportvorrichtung transportiert wird.

4. Lackiersystem nach einem der Ansprüche 1 bis 3, wobei der Lackierroboter fest auf einer ersten Höhe auf einer Seitenwand (111) einer Lackierkabine (110) für die Karosserie eingerichtet ist, und der Türöffnungs-/Schließroboter auf einer zweiten Höhe auf der Seitenwand der Lackierkabine (110) für die Karosserie fest eingerichtet ist.

5. Lackiersystem nach Anspruch 4, wobei der Lackierroboter durch eine Befestigungshalterung (20a) auf der Seitenwand der Lackierkabine für die Karosserie fest eingerichtet ist.

6. Lackiersystem nach einem der Ansprüche 1 bis 5, wobei die erste Höhe, auf welcher der Lackierroboter eingerichtet ist, oberhalb der zweiten Höhe positioniert ist.

7. Lackiersystem nach einem der Ansprüche 1 bis 6, wobei der Türöffnungs-/Schließroboter ein horizontaler Vielgelenkroboter ist, wobei der Lackierroboter ein vertikaler Vielgelenkroboter ist und ein Bereich der horizontalen Bewegung des Türöffnungs-/Schließroboters größer als ein Bereich der horizontalen Bewegung des Lackierroboters ist.

8. Lackiersystem nach einem der Ansprüche 1 bis 7, wobei der Türöffnungs-/Schließroboter auf einer laufabwärtigen Seite in einer Richtung (Y2) eingerichtet ist, in welche die Karosserietransportvorrichtung die Karosserie in Bezug auf den Lackierroboter transportiert.

9. Lackiersystem nach einem der Ansprüche 1 bis 7, wobei der Türöffnungs-/Schfießroboter und der Lackierroboter in einer derartigen Position eingerichtet sind, dass der Türöffnungs-/Schließroboter und der Lackierroboter einander in der Draufsicht überlappen.

10. Lackiersystem nach einem der Ansprüche 1 bis 9, wobei ein Bewegungsbereich des Türöffnungs-/Schließroboters in einer horizontalen Richtung und eine Transportrichtung der Karosserie größer ist als eine Strecke, welche die Karosserietransportvorrichtung die Karosserie während des Lackierens des inneren Abschnitts der Tür der Karosserie durch den Lackierroboter bewegt.

11. Lackiersystem nach einem der Ansprüche 1 bis 10, wobei der Türöffnungs-/Schließroboter derart ausgebildet ist, dass er fähig ist, die Tür in einem Zustand, in dem eine Position der Tür der in einer Transportrichtung der Karosserietransportvorrichtung transportierten Karosserie in der Transportrichtung in Bezug auf eine Position, in welcher der Türöffnungs-/Schließroboter eingerichtet ist, vorgerückt ist, in einem offenen Zustand zu halten.

12. Lackiersystem nach einem der Ansprüche 1 bis 11, wobei
der Türöffnungs-/Schließroboter eine Öffnungs-Schließhand (40) zum Öffnen und Schließen der Tür der Karosserie des Körpers umfasst,
die Öffnungs-/Schließhand ein Anziehungshilfsmittel (41) hat, in dem eine Vielzahl in dem eine Vielzahl von Permanentmagneten (41a) gestapelt sind und das ausgebildet ist, um die Tür der Karosserie durch das Anziehungshilfsmittel (41) anzuziehen, um diese zu öffnen und zu schließen;
wenigstens ein Teil der mehreren Permanentmagnete des Anziehungshilfsmittels derart gestapelt ist, dass die gleichen Magnetpole, die benachbart zu den Permanentmagneten sind, einander entlang einer Stapelrichtung (A) gegenüber liegen.

13. Lackiersystem nach Anspruch 12, wobei die Öffnungs-Schließhand ferner einen mechanischen Sensor (46) zum Erfassen der Tür der Karosserie hat.

14. Lackiersystem nach Anspruch 12 oder 13, wobei
das Anziehungshilfsmittel in einer Stabform ausgebildet ist, und
die Öffnungs-/Schließhand ferner einen Drehmechanismusabschnitt (45) hat, der das Anziehungshilfsmittel hält, während zugelassen wird, dass das Anziehungshilfsmittel sich um eine lange Achse des Anziehungshilfsmittels dreht.

15. Lackiersystem nach einem der Ansprüche 12 bis 14, wobei die Öffnungs-/Schließhand ferner einen Lastunterdrückungsabschnitt (43) umfasst, der die Anwendung einer übermäßigen Last auf die Öffnungs-/Schließhand unterbindet, wenn sie in hohem Maß belastet ist.

## Revendications

1. Dispositif de peinture (100, 200) comprenant :
un dispositif de transport de carrosserie (10) transportant une carrosserie (120) ;
un robot de peinture (20) agencé à demeure à une première hauteur (H2), peignant au moins une partie interne d'une portière (121) de ladite carrosserie tout en modifiant sa posture afin de suivre le déplacement de ladite carrosserie par ledit dispositif de transport de carrosserie ; et
un robot d'ouverture/fermeture de portière (30) agencé à demeure à une seconde hauteur (H3) différente de ladite première hauteur, formé de telle sorte que sa plage de fonctionnement peut se recouvrir avec au moins une plage de fonctionnement dudit robot de peinture, dans lequel ledit robot d'ouverture/fermeture de portière ouvre et ferme ladite portière de ladite carrosserie et maintient ladite portière dans un état ouvert tout en modifiant sa posture afin de suivre le déplacement de ladite carrosserie par ledit dispositif de transport de carrosserie, **caractérisé en ce que** :
ledit robot d'ouverture/fermeture de portière comporte un outillage d'attraction (41), dans lequel des aimants d'une pluralité d'aimants permanents (41a) sont empilés, et est agencé de manière à attirer ladite portière de ladite carrosserie avec ledit outillage d'attraction afin d'ouvrir et de fermer celle-ci ; au moins une partie des aimants de ladite pluralité d'aimants permanents dudit outillage d'attraction sont empilés de telle sorte que les mêmes pôles magnétiques desdits aimants permanents adjacents sont l'un face à l'autre suivant une direction d'empilement (A) ; et
ledit outillage d'attraction est formé de manière à pouvoir obtenir un effort magnétique constant n'importe où sur des sites d'attraction dudit outillage d'attraction.

2. Dispositif de peinture selon la revendication 1, dans lequel ledit robot d'ouverture/fermeture de portière est un robot du type à axe multiple horizontal.

3. Dispositif de peinture selon la revendication 2, dans lequel ledit robot d'ouverture/fermeture de portière est agencé à ladite seconde hauteur de telle sorte qu'une position d'une pointe de doigt dudit robot d'ouverture/fermeture de portière est égale à une hauteur de ladite portière de ladite carrosserie transportée par ledit dispositif de transport de carrosserie.

4. Dispositif de peinture selon l'une quelconque des revendications 1 à 3, dans lequel ledit robot de peinture est agencé à demeure à ladite première hauteur sur une paroi latérale (111) d'une cabine de peinture (110) pour ladite carrosserie, et ledit robot d'ouverture/fermeture de portière est agencé à demeure à ladite seconde hauteur sur ladite paroi latérale de ladite cabine de peinture pour ladite carrosserie.

5. Dispositif de peinture selon la revendication 4, dans lequel ledit robot de peinture est agencé à demeure sur ladite paroi latérale de ladite cabine de peinture pour ladite carrosserie par l'intermédiaire d'un montage de fixation (20a).

6. Dispositif de peinture selon l'une quelconque des revendications 1 à 5, dans lequel ladite première hauteur à laquelle ledit robot de peinture est réglé est positionnée au-dessus de ladite seconde hauteur.

7. Dispositif de peinture selon l'une quelconque des revendications 1 à 6, dans lequel ledit robot d'ouverture/fermeture de portière est un robot du type à axe multiple horizontal, ledit robot de peinture est un robot du type à axe multiple vertical, et une plage de déplacement horizontal dudit robot d'ouverture/fermeture de portière est supérieure à une plage de déplacement horizontal dudit robot de peinture.

8. Dispositif de peinture selon l'une quelconque des revendications 1 à 7, dans lequel ledit robot d'ouverture/fermeture de portière est agencé sur un côté aval dans une direction (Y2) dans laquelle ledit dispositif de transport de carrosserie transporte ladite carrosserie par rapport audit robot de peinture.

9. Dispositif de peinture selon l'une quelconque des revendications 1 à 7, dans lequel ledit robot d'ouverture/fermeture de portière et ledit robot de peinture sont agencés à une position telle que ledit robot d'ouverture/fermeture de portière et ledit robot de peinture se recouvrent l'un l'autre sur une vue en plan.

10. Dispositif de peinture selon l'une quelconque des revendications 1 à 9, dans lequel une plage de déplacement dudit robot d'ouverture/fermeture de portière dans une direction horizontale et une direction de transport pour ladite carrosserie est supérieure à une distance sur laquelle ledit dispositif de transport de carrosserie déplace ladite carrosserie au cours de la peinture de ladite partie interne de ladite portière de ladite carrosserie par ledit robot de peinture.

11. Dispositif de peinture selon l'une quelconque des revendications 1 à 10, dans lequel ledit robot d'ouverture/fermeture de portière est formé de manière à pouvoir maintenir ladite portière dans un état ouvert dans un état dans lequel une position de ladite portière de ladite carrosserie transportée dans une direction de transport dudit dispositif de transport de carrosserie a avancé dans ladite direction de transport par rapport à une position dans laquelle ledit robot d'ouverture/fermeture de portière est réglé.

12. Dispositif de peinture selon l'une quelconque des revendications 1 à 11, dans lequel,
ledit robot d'ouverture/fermeture de portière comporte une main d'ouverture/fermeture (40) afin d'ouvrir et de fermer ladite portière de ladite carrosserie,
ladite main d'ouverture/fermeture comporte un outillage d'attraction (41), dans lequel des aimants d'une pluralité d'aimants permanents (41a) sont empilés, et est formée de manière à attirer ladite portière de ladite carrosserie par ledit outillage d'attraction afin d'ouvrir et de fermer cette dernière, et
au moins une partie des aimants de ladite pluralité d'aimants permanents dudit outillage d'attraction sont empilés de telle sorte que les mêmes pôles magnétiques desdits aimants permanents adjacents sont l'un face à l'autre suivant une direction d'empilement (A).

13. Dispositif de peinture selon la revendication 12, dans lequel ladite main d'ouverture/fermeture présente, en outre, un capteur mécanique (46) afin de détecter ladite portière de ladite carrosserie.

14. Dispositif de peinture selon la revendication 12 ou 13, dans lequel
ledit outillage d'attraction est réalisé en une forme de baguette, et
ladite main d'ouverture/fermeture comporte, en outre, une partie de mécanisme de rotation (45) supportant ledit outillage d'attraction tout en assurant la rotation dudit outillage d'attraction autour d'un axe long dudit outillage d'attraction.

15. Dispositif de peinture selon l'une quelconque des revendications 12 à 14, dans lequel ladite main d'ouverture/fermeture comporte, en outre, une partie d'inhibition de charge (43) inhibant l'application d'une charge excessive sur ladite main d'ouverture/fermeture lorsqu'elle est largement chargée.
